# EUROPEAN PATENT SPECIFICATION

(11) **EP 1 839 993 B1**
(45) Date of publication and mention of the grant of the patent: **11.02.2009**
(21) Application number: 07290326.3
(22) Date of filing: 16.03.2007
(51) Int. Cl.: B62D 1/181

(54) **Vehicle steering apparatus**
Fahrzeuglenkungsgerät
Appareil de direction de véhicule

(30) Priority: 27.03.2006 JP 2006086387
(43) Date of publication of application: 03.10.2007
(73) Proprietor: JTEKT Corporation, Osaka-shi Osaka 542-8502 (JP)
(72) Inventor: Maeda, Toshinobu c/o JKETK Corporation, Osaka 542-8502 (JP); Nagano, Hiroji c/o JKETK Corporation, Osaka 542-8502 (JP)
(74) Representative: Bertrand, Didier

(56) References cited:
- EP-A- 1 008 506

## Description

### BACKGROUND

The present invention relates to a steering apparatus that makes positional adjustment of a steering member possible, and furthermore prevents adjustment of the steering member according to the state of movement of a vehicle.

Steering a vehicle is performed by the operator of the vehicle operating a steering member, and typically is performed by the turning operation of a steering wheel being transmitted to a steering mechanism by way of a steering shaft, which causes that steering mechanism to function. As a vehicle steering apparatus that performs this kind of steering, there are apparatuses that are capable of adjusting the position of the steering wheel that is attached to the top end of a steering column that is supported so that it is tilted in the vertical direction inside the vehicle to correspond with the operator's desire, physique and driving posture. To perform this kind of steering wheel adjustment, there is adjustment in which the steering column is extended or contracted and the position of the steering wheel is moved forward or backward (hereafter referred to as telescoping adjustment), and there is adjustment in which the steering column is tilted and the position of the steering wheel is moved up or down (hereafter referred to as tilt adjustment). Also, a vehicle steering apparatus has been put into practical use that performs telescoping adjustment and/or tilt adjustment by actuator operation according to operation by the operator (for example, Japanese Patent Application Laid-Open No. H4-39164).

In this kind of vehicle steering apparatus that is capable of telescoping adjustment and tilt adjustment, when steering wheel adjustment is performed by mistake by the operator or by error, an unsafe and undesirable condition may occur. Therefore, in the case of the vehicle steering apparatus disclosed in Japanese Patent Application Laid-Open No. H4-39164, tilt adjustment of the steering wheel while the vehicle is moving is not allowed so that there is no problem with safety.

A further vehicle steering apparatus, having movement detecting means for detecting whether or not a vehicle is moving, an actuator that adjusts the position of a steering member of the vehicle, and inhibiting means for inhibiting the operation of said actuator when a detection result of said movement detecting means indicates that the vehicle is moving, is disclosed in document EP 1 008 506 A2.

### BRIEF SUMMARY

In the case of the apparatus disclosed in Japanese Patent Application Laid-Open No. H4-39164, construction is such that tilt adjustment of the steering wheel is never allowed while the vehicle is moving. However, in the case where adjustment of the steering wheel is performed while the vehicle is moving, it does not mean that an unsafe and undesirable condition will always occur. In other words, performing adjustment of the steering wheel while the vehicle is turning due to mistaken operation or error by the operator affects the steering and an unsafe and undesirable condition occurs. However, adjustment of the steering while the vehicle is moving straight poses hardly any problem with safety, and not allowing this kind of adjustment is an excessive safety measure, and on the contrary could pose a problem of inconvenience or discomfort for the operator.

Taking the aforementioned problem into consideration, an object is to provide a vehicle steering apparatus that, by not allowing adjustment of the steering wheel depending on the state of movement of a vehicle, improves convenience for the operator while at the same time takes safety into consideration.

The vehicle steering apparatus of a first aspect is a vehicle steering apparatus having movement detecting means for detecting whether or not a vehicle is moving, an actuator that adjusts the position of a steering member of the vehicle, and inhibiting means for inhibiting the operation of the actuator when the detection result of the movement detecting means indicates that the vehicle is moving, and comprising: steering detecting means for detecting whether or not the steering member is being operated; and releasing means for releasing the inhibition by the inhibiting means when the steering detecting means detects that the steering member is not being operated.

With the first aspect, a vehicle steering apparatus that is constructed so that it inhibits operation of the actuator that adjusts the position of the steering member while the vehicle is moving, inhibits operation of the actuator when the steering member is being operated, and releases that inhibition of the actuator when the steering member is not being operated. This makes it impossible to adjust the position of the steering wheel while the vehicle is turning, and thus maintains safety. On the other hand, it is possible to adjust the position of the steering wheel while the vehicle is moving straight, so convenience for the operator can be improved.

The vehicle steering apparatus of a second aspect comprises a torque sensor that detects a steering torque that is applied to the steering member, and this torque sensor is used as the steering detecting means.

With the second aspect, the torque sensor is used as the steering detecting means, so it is possible with an inexpensive detection means such as a torque sensor to detect with good precision whether or not the steering member is being operated.

The vehicle steering apparatus of a third aspect comprises: a torque sensor that detects a steering torque that is applied to the steering member; a steering assistance motor that assists steering based on the steering torque detected by the torque sensor; a rotation sensor that detects rotation of the motor; and a current sensor that detects the drive current for the motor; and one or a plurality of the torque sensor, rotation sensor, and current sensor is used as the steering detecting means.

With the third aspect, a vehicle steering apparatus that comprises a steering assistance motor uses one or a plurality of the torque sensor, rotation sensor or current sensor that is required for motor control as the steering detecting means, so it is not necessary to add a special sensor.

The above and further objects and features of the invention will more fully be apparent from the following detailed description with accompanying drawings.

### BRIEF DESCRIPTION OF THE SEVERAL VIEWS OF THE DRAWINGS

FIG. 1 is a drawing showing the construction of the vehicle-steering apparatus of one embodiment;
FIG. 2 is an enlarged drawing of the area near the supported section that is supported by the upper bracket;
FIG. 3 is a flowchart showing the procedure of the inhibiting control process of the position adjustment control unit; and
FIG. 4 is a flowchart showing the procedure of the tilt adjustment control process of the position adjustment control unit.

### DETAILED DESCRIPTION

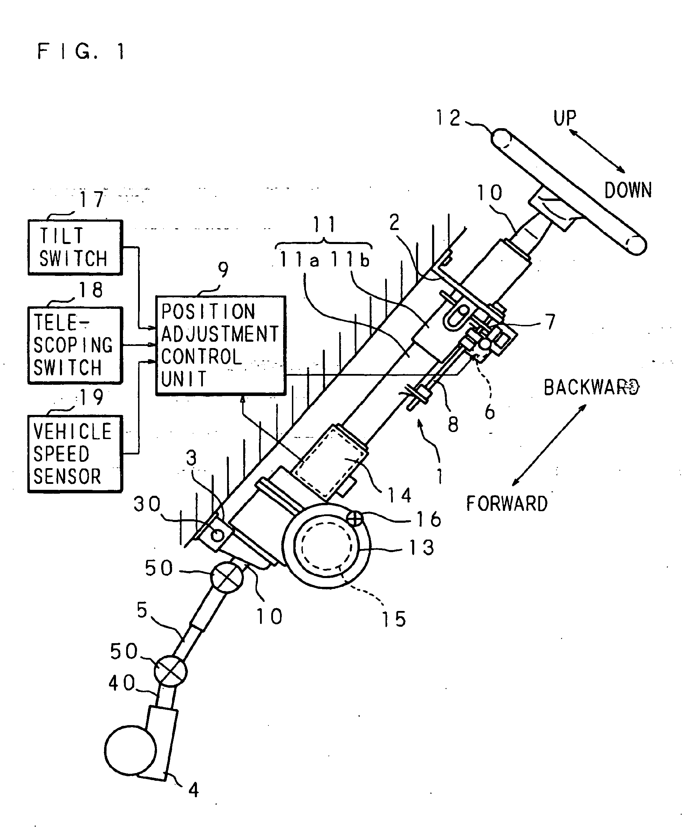

The preferred embodiment will be described below based on the drawings. FIG. 1 is a drawing showing the construction of the vehicle steering apparatus of one embodiment.

In FIG. 1 a steering column 1 comprises: a cylindrical shaped column housing 11 and a steering shaft 10 that is supported inside the column housing 11 so that it can rotate freely. The middle section and one end section of the column housing 11 are supported, respectively, by an upper bracket 2 and lower bracket 3 that are attached to a vehicle body, and the steering column 1 is installed inside the vehicle so that the side supported by the lower bracket 3 is inclined in the forward and downward direction.

A steering wheel 12 is fastened around the upper end of the steering shaft 10 that protrudes out from the upper section of the column housing 11 so that inside the vehicle it faces toward the front of the operator in order that it can be held and operated. Also, the lower end section of the steering shaft 10 that protrudes out from the lower section of the column housing 11 faces an input shaft 40 of a steering mechanism 4 that is located in the forward outer section of the inside of the vehicle so that the center axes cross and are eccentric; these shafts 10, 40 are linked together by way of an intermediate shaft 5 having universal joints 50, 50 on both ends so that rotation can be transmitted.

With the construction described above, when the operator applies a steering torque to the steering wheel 12 in order to steer the vehicle, the steering torque is transmitted to the input shaft 40 of the steering mechanism 4 via the steering shaft 10 and intermediate shaft 5, and steering is performed by the operation of the steering mechanism 4.

The vehicle steering apparatus shown in FIG. 1 comprises a steering assistance motor 13 located near the lower end section of the column housing 11, and a torque sensor 14 that is located inside the column housing 11 at a position higher than the motor 13. Also, this vehicle steering apparatus functions as an electric power steering apparatus that, by way of the torque sensor 14, detects the steering torque that is applied to the steering wheel 12, then, based on the detected steering torque, transmits the rotation force of the steering assistance motor 13 to the steering shaft 10 inside the column housing 11 and assists the steering that is performed as described above.

Located in the steering assistance motor 13, there is a rotation sensor 15 that uses a well-known resolver. The rotation position that is detected by this rotation sensor 15 is used for drive control of the steering assistance motor 13. Furthermore, there is a current sensor 16 in the steering assistance motor 13, and the drive current that is detected by this current sensor 16 is used as a feedback signal for controlling operation of the steering assistance motor 13.

Moreover, the vehicle steering apparatus that is shown in FIG. 1 is capable of performing telescoping adjustment that extends or contracts the steering column 1 in the axial direction thereof in order to change the position of the steering wheel 12 that is operated by the operator in the forward or backward direction in order to fit the operating posture of the operator, and is capable of performing tilt adjustment that changes the inclined angle of the steering column 1 in order to move the steering wheel 12 up or down to similarly fit the operating posture of the operator.

The column housing 11 of the steering column 1 comprises an inner cylinder 11a and outer cylinder 11b that fit together over a suitable length, and the steering shaft 10 that is supported inside the column housing 11 comprises a similar fitted section, and each fitted section is constructed such that the fitted length is variable in the axial direction of the column housing 11. By increasing or decreasing the fitted length of these fitted sections, the steering column 1 extends or contracts, and the position of steering wheel 12 that is attached to the upper end section of the steering shaft 10 is adjusted (telescoping adjustment) in the forward or backward direction in accordance with this extension or contraction.

On the other hand, support of the lower end section of the column housing 11 by the lower bracket 3 is such that it is capable of rocking motion around a support pin 30 that extends in the left and right direction orthogonal to the axial direction of the steering column 1. By this rocking motion, the position of the steering wheel 12 on the upper end section of the steering column 1 is adjusted (tilt adjustment) in the up or down direction. These adjustment operations are performed by transmission from a single actuator that is installed in the middle of the column housing 11.

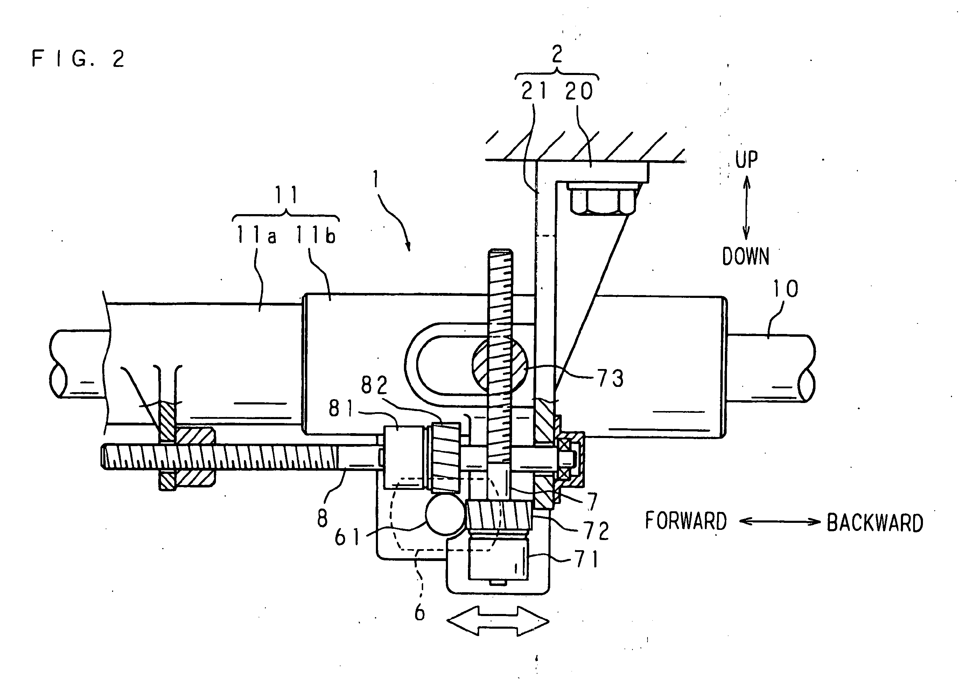

A motor 6 that functions as the actuator for performing the telescoping adjustment operation and tilt adjustment operation is installed near the supported section that is supported by the upper bracket 2 of the column housing 11. FIG. 2 is an enlarged view of the supported section that is supported by the upper bracket 2.

The upper bracket 2 that supports the middle section of the column housing 11 comprises a fastening plate 20 that is fastened to the vehicle body, and a support plate 21 that hangs down from the fastening plate 20. The support plate 21 supports the column housing 11 so that it can move in the up, down, forward or backward direction.

The motor 6 is fixed to the lower section of the outer cylinder 11b of the column housing 11, and the output end of this motor 6 is formed so that it is integrated with a worm 61 having an adequate length.

Also, a tilt shaft 7 is installed to the outer cylinder 11b of the column housing 11 in the radial direction of the column housing 11, and this tilt shaft 7 is capable of rotating around its axis. A tilt clutch 71 is connected to the lower end section of the tilt shaft 7, and a worm wheel 72 that engages with the worm 61 from the rear side is located on the upper section of the tilt clutch 71 so that it is concentric with the tilt shaft 7. A screw section having an appropriate length is formed around the tilt shaft 7, and this screw section screws into a cylindrical shaped follower 73 that is installed on the front surface of the support plate 21 of the upper bracket 2. The follower 73 is supported by a bracket that is fixed to the front surface of the support plate 21 so that it can move freely in the forward and backward directions.

On the other hand, a telescoping shaft 8 is installed to the column housing 11 and extends along the axial direction of the column housing 11 from the middle of the inner cylinder 11a to the support plate 21 of the upper bracket 2, and this telescoping shaft 8 is capable of rotating around its axis. A screw section having an adequate length is formed around the telescoping shaft 8, and this screw section screws into a nut member that is fastened in the middle of the inner cylinder 11a. A telescoping clutch 81 is installed in the middle of the telescoping shaft 8 that is installed in this way, and a worm wheel 82 that engages with the worm 61 from the top is attached to one side of the telescoping shaft 8 so that it is concentric with the telescoping shaft 8.

With this kind of construction, when the motor 6 is driven and rotates, the rotation of the motor 6 is transmitted by way of the worm 61 that is integrated with the output end of the motor 6, to the worm wheels 72, 82 that engage with that worm 61 from the rear and top, and the rotation of these worm wheels 72, 82 is transmitted to the tilt shaft 7 or telescoping shaft 8 on the condition that the respectively attached tilt clutch 71 or telescoping clutch 81 is engaged, and these shafts 7, 8 rotate around their respective axis. A moving force in the radial direction is applied to the outer cylinder 11b according to the rotation of the tilt shaft 7, and the steering column 1 rocks in the up or down direction around the support pin 30, and from this movement, tilt adjustment of the steering wheel 12 is performed. Similarly, a moving force in the axial direction is applied to the outer cylinder 11b according to the rotation of the telescoping shaft 8, and with an elongated hole that is long in the forward and backward direction and that is formed in a bracket that is fixed to the front surface of the support plate 21 of the upper bracket 2 as a guide, the outer cylinder 8 moves in the axial direction of the column housing 11, which causes the steering column 1 to extend or contract, and from this extension or contraction, telescoping adjustment of the steering wheel 12 is performed.

As shown in FIG. 1, this kind of motor 6 is driven by a control instruction that is given from a position adjustment control unit 9. A tilt operation signal is given to the position adjustment control unit 9 according to the operation of a tilt switch 17, and a telescoping operation signal is given according to the operation of a telescoping switch 18. There are two contacts on the tilt switch 17, a tilt-up contact for raising the steering wheel 12, and a tilt-down contact for lowering the steering wheel 12; and by changing the contact according to the operation of the tilt switch 17, a tilt-up signal SW1 or tilt-down signal SW2 is given to the position adjustment control unit 9. The same is also true for the telescoping switch 18.

The position adjustment control unit 9 issues a control instruction to the motor 6 and the tilt clutch 71 according to the operation of the tilt switch 17 performed by the operator for moving the steering wheel 12 up or down, and performs tilt adjustment by causing the tilt clutch 71 to engage and the motor 6 to rotate forward or in reverse. By doing this, the steering wheel 12 is raised or lowered according to the operation of the tilt switch 17 to the vertical position desired by the operator.

Furthermore, the position adjustment control unit 9 issues a control instruction to the motor 6 and the telescoping clutch 81 according to the operation of the telescoping switch 18 performed by the operator for moving the steering wheel 12 forward or backward, and performs well-known telescoping adjustment by causing the telescoping clutch 81 to engage and the motor 6 to rotate forward or in reverse. By doing this, the steering wheel 12 is moved forward or backward according to the operation of the telescoping switch 18 to the forward or backward position desired by the operator. The position adjustment control unit 9 is constructed so that it is possible to individually perform tilt adjustment and telescoping adjustment, and to perform these adjustments at the same time.

Also, the vehicle speed V that is detected by a vehicle speed sensor 19 that is used as movement detecting means, and the steering torque T that is detected by a torque sensor 14 that is used as steering wheel operation detecting means are given to the position adjustment control unit 9, and the position adjustment control unit 9 executes inhibiting control (described below) as an interruption process between the tilt adjustment operation and telescoping adjustment operation described above based on the detection results of these detecting means.

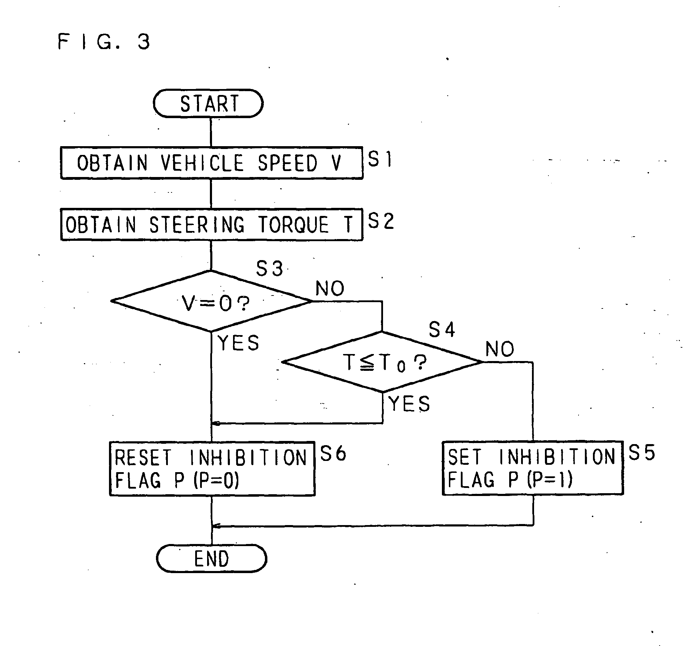

FIG. 3 is a flowchart showing the procedure of the inhibiting control process of the position adjustment control unit 9. The position adjustment control unit 9 obtains the vehicle speed V that is detected by the vehicle speed sensor 19 (step S1), and obtains the steering torque T that is detected by the torque sensor 14 (step S2).

Next, the position adjustment control unit 9 determines whether or not the vehicle speed V is '0' (step S3), and when the vehicle speed V is '0' (step S3: YES), the procedure advances to step S6, and when the vehicle speed V is not '0' (step S3: NO), the position adjustment control unit 9 determines whether or not the steering torque is a predetermined value T0 or less (step S4). The predetermined value T0 that is used in the judgment of step S4 is an appropriate value that is greater than the upper limit of a dead zone that is set for the rotation operation of the steering wheel 12 so that a steering assistance force is not generated within a fixed steering torque range.

When the steering torque T is greater than the predetermined value T0 (step S4: NO), an inhibition flag P is set (P = 1: step S5). However, when the steering torque is the predetermined value T0 or less (step S4: YES), the inhibition flag P is reset (P = 0: step S6). Execution and release of this inhibiting control will be explained below using the tilt adjustment operation as an example.

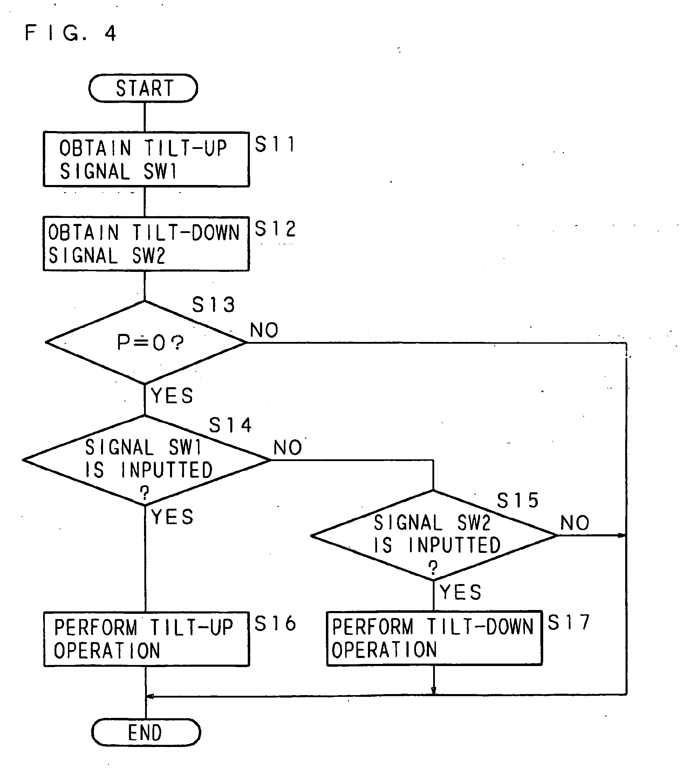

FIG. 4 is a flowchart showing the procedure of the tilt adjustment control process of the position adjustment control unit 9. The position adjustment control unit 9 obtains the tilt operation signals, tilt-up signal SW1 and tilt-down signal SW2, which are sent from the tilt switch 17 (step S11, S12).

Next, the position adjustment control unit 9 determines whether or not the inhibition flag P is 1' or '0' (step S 13), and when the inhibition flag is P = 0 (step S13: YES), the procedure advances to step S14, and when the inhibition flag is P = 1 (step S13: NO), the position adjustment control unit 9 inhibits driving of the motor 6, and the procedure ends processing without performing the tilt adjustment operation.

In step S14, the position adjustment control unit 9 determines whether or not the tilt-up signal SW1 is inputted, and when the tilt-up signal SW1 is inputted (step S14: YES), the procedure advances to step S16, and when the tilt-up signal SW1 is not inputted (step S14: NO), the procedure advances to step S15.

In step S15, the position adjustment control unit 9 determines whether or not the tilt-down signal SW2 is inputted, and when the tilt-down signal SW2 is inputted (step S15: YES), the procedure advances to step S17, and when the tilt-down signal SW2 is not inputted (step S15: NO), the procedure ends processing without performing the tilt adjustment operation.

In step S16, the position adjustment control unit 9 issues a control instruction to the motor 6 and the tilt clutch 71 according to the input of the tilt-up signal SW1, and together with causing the tilt clutch 71 to engage, causes the motor 6 to rotate forward and performs the tilt-up operation (step S16). On the other hand, in step S17, the position adjustment control unit 9 issues a control instruction to the motor 6 and the tilt clutch 71 according to the input of the tilt-down signal SW2, and together with causing the tilt clutch 71 to engage, causes the motor 6 to rotate in reverse and performs the tilt-down operation (step S17).

As described above, in step S5 shown in FIG. 3, the position adjustment control unit 9 sets an inhibition flag P, executes inhibiting control to inhibit operation of the motor 6 and inhibits the tilt adjustment operation from being performed. Also, in step S6 shown in FIG. 3, the position adjustment control unit 9 resets the inhibition flag P, releases inhibiting control that inhibits operation of the motor 6 and allows the tilt adjustment operation to be performed. Similar processing is also performed for the telescoping adjustment operation, so an explanation of it will be omitted here.

This kind of inhibiting control is executed when the vehicle speed V is not '0' and the steering torque T is greater than the predetermined value T0. By doing this, it becomes impossible to perform tilt adjustment and/or telescoping adjustment when the vehicle is moving and the steering wheel 12 is being turned, even though the tilt switch 17 and/or the telescoping switch 18 are operated. In this way, the vehicle steering apparatus of the embodiment is constructed so that operation of the motor 6 that performs the tilt and telescoping adjustment is inhibited when the vehicle is moving and turning, and the inhibiting control is released when the steering wheel 12 is not being turned, so it is not possible to adjust the position of the steering wheel 12 while the vehicle is turning, and as a result it is possible to avoid an unsafe and undesirable condition that could affect the steering of the vehicle.

On the other hand, the inhibiting control is released when the vehicle speed V is '0', or when the vehicle speed V is not '0' and the steering torque T is the predetermined value T0 or less. By doing this, it is possible to perform tilt adjustment and/or telescoping adjustment when the vehicle is stopped and the tilt switch 17 and/or the telescoping switch 18 are operated, and it is also possible to perform tilt adjustment and/or telescoping adjustment even when the vehicle is moving and the steering wheel 12 is not being turned. Therefore, since it is possible to adjust the position of the steering wheel 12 when the vehicle is moving straight, it is possible to improve convenience for the operator.

Moreover, an existing sensor is used as steering detecting means for detecting the rotation of the steering wheel 12, so there is no need to add a special sensor. In the embodiment described above, a torque sensor 14 is used as the steering detecting means, however, needless to say, it is also possible to use other detecting means such as the rotation sensor 15 of the steering assistance motor 13, or the current sensor 16 of the steering assistance motor 13 as the steering detecting means.

Furthermore, in the embodiment described above, one sensor is used as the steering detecting means, however, it is also possible to use a plurality of sensors. For example, it is possible to use the torque sensor 14, the rotation sensor 15 and the current sensor 16 as the steering detecting means; and by using construction in which detection results are used when the results from two of these sensors coincide, it is possible to execute inhibiting control when one sensor is defective, which increases reliability.

Also, in the embodiment described above, the vehicle speed sensor 19 is used as the movement detecting means, however, is not limited to this, and the movement detecting means can be any detecting means that is capable of determining whether or not the vehicle is moving.

Applying to a steering-by-wire type steering apparatus is feasible as another embodiment. A steering-by-wire type steering apparatus has well-known construction in which steering is performed by operating a steering motor, which is attached to the steering mechanism 4 that is mechanically separated from the steering wheel 12, based on detection results of the direction and amount in which the steering wheel 12 is turned.

Also, in a steering-by-wire type steering apparatus, the steering mechanism 4 and the steering wheel 12 are mechanically separated, so it is necessary that construction be such that the steering mechanism 4 is operated based on the direction and amount in which the steering wheel 12 is turned. Therefore, the steering angle is detected by a steering angle sensor that is located in the steering mechanism 4, and the steered angle is detected by a steered angle sensor that is located on the steering shaft 10, and the steering motor is controlled so that actual steering angle of the steering mechanism 4 coincides with the steered angle of the steering wheel 12.

In this kind of steering-by-wire type steering apparatus, by using a steering angle sensor or a steered angle sensor as the steering detecting means for detecting turning of the steering wheel 12, for example, it is possible to perform the inhibiting control operation for the tilt adjustment operation and telescoping adjustment operation as described above. In this case as well, it is possible to detect whether or not the steering wheel 12 is turned by detecting whether or not the steering angle or the steered angle that is detected by the steering angle sensor or the steered angle sensor is a predetermined value or less, so it is not necessary to add a special sensor. The construction for performing telescoping adjustment and/or tilt adjustment is the same as that described for the previous embodiment, so an explanation of it is omitted here.

Furthermore, the above-mentioned vehicle steering apparatus can also be applied to a manual type steering apparatus by which steering is performed by just the steering torque that is applied to the steering wheel 12 by the operator, or can also be applied to a hydraulic power steering apparatus that assists steering by power that is generated by a hydraulic cylinder that is located in the steering mechanism 4.

## Claims

1. A vehicle steering apparatus, having movement detecting means (19) for detecting whether or not a vehicle is moving, an actuator (6) that adjusts the position of a steering member (12) of the vehicle, and inhibiting means (9) for inhibiting the operation of said actuator (6) when the detection result of said movement detecting means (19) indicates that the vehicle is moving, **characterized by** comprising:
steering detecting means (14) for detecting whether or not the steering member (12) is being operated; and
releasing means (9) for, releasing the inhibition by said inhibiting means (9) when said steering detecting means (14) detects that the steering member (12) is not being operated.

2. The vehicle steering apparatus of claim 1, wherein
said steering detecting means is a torque sensor (14) that detects a steering torque that is applied to the steering member (12).

3. The vehicle steering apparatus of claim 2, wherein
the steering member (12) is detected as not being operated when the steering torque detected by said torque sensor (14) is a predetermined value or less.

4. The vehicle steering apparatus of claim 1, comprising:
a torque sensor (14) that detects a steering torque that is applied to the steering member (12); a steering assistance motor(13) that assists steering based on the steering torque detected by said torque sensor (14); a rotation sensor (15) that detects rotation of said motor (13); and a current sensor (16) that detects the drive current for said motor (13); and at least one of said torque sensor (14), said rotation sensor (15), and said current sensor (16) is used as said steering detecting means.

5. The vehicle steering apparatus of any one of the claims 1 to 4, wherein
adjustment of the position of the steering member (12) by said actuator (6) includes at least one of adjustment that moves then position of the steering member (12) forward or backward, and adjustment that moves the position of the steering member (12) up or down.

## Patentansprüche

1. Fahrzeuglenkungsvorrichtung, die hat: ein Bewegungserfassungsmittel (19), um zu erfassen, ob sich ein Fahrzeug bewegt oder nicht, einen Aktuator (6), der die Position eines Lenkungselements (12) des Fahrzeugs einstellt, und ein Blockier- bzw. Sperrmittel (9) zum Unterdrücken der Betätigung des Aktuators (6), wenn das Erfassungsergebnis des Bewegungserfassungsmittels (19) anzeigt, dass das Fahrzeug sich bewegt,
**dadurch gekennzeichnet, dass** sie umfasst:
Lenkungserfassungsmittel (14) zum Erfassen, ob das Lenkungselement (12) betätigt wird oder nicht; und
Lösemittel (9) zum Lösen der Blockierung durch das Blockiermittel (9), wenn das Lenkungserfassungsmittel (14) erfasst, dass das Lenkungselement (12) nicht betätigt wird.

2. Fahrzeuglenkungsvorrichtung nach Anspruch 1, wobei
das Lenkungserfassungsmittel ein Drehmomentsensor (14) ist, der ein Lenkdrehmoment erfasst, das auf das Lenkungselement (12) angewendet wird.

3. Fahrzeuglenkungsvorrichtung nach Anspruch 2, wobei
das Lenkungselement (12) als nicht betätigt erfasst wird, wenn das von dem Drehmomentsensor (14) erfasste Lenkdrehmoment ein vorgegebener Wert oder weniger ist.

4. Fahrzeuglenkungsvorrichtung nach Anspruch 1, das umfasst:
einen Drehmomentsensor (14), der ein Lenkdrehmoment erfasst, das an das Lenkungselement (12) angelegt wird; einen Lenkunterstützungsmotor (13), der das Lenken basierend auf dem von dem Drehmomentsensor (14) erfassten Lenkdrehmoment unterstützt; einen Rotationssensor (15), der die Rotation des Motors (13) erfasst; und einen Stromsensor (16), der den Antriebsstrom für den Motor (13) erfasst; und wenigstens einen Drehmomentsensor (14), wobei der Rotationssensor (15) und der Stromsensor (16) als das Lenkungserfassungsmittel verwendet werden.

5. Fahrzeuglenkungsvorrichtung nach einem der Ansprüche 1 bis 4, wobei
die Einstellung der Position des Lenkungselements (12) durch den Aktuator (6) wenigstens eine Einstellung, welche die Position des Lenkungselements (12) vorwärts oder rückwärts bewegt, und eine Einstellung, welche die Position des Lenkungselements (12) nach oben oder unten bewegt, umfasst.

## Revendications

1. Dispositif de direction de véhicule, comportant un moyen de détection de mouvement (19) destiné à détecter si un véhicule se déplace ou non, un actionneur (6) qui règle la position d'un élément de direction (12) du véhicule et un moyen d'inhibition (9) destiné à inhiber le fonctionnement dudit actionneur (6) lorsque le résultat de détection dudit moyen de détection de mouvement (19) indique que le véhicule se déplace, **caractérisé par le fait qu'**il comprend :
un moyen de détection de direction (14) destiné à détecter si l'élément de direction (12) est manoeuvré ou non ; et
un moyen de libération (9) destiné à libérer l'inhibition par ledit moyen d'inhibition (9) lorsque ledit moyen de détection de direction (14) détecte que l'élément de direction (12) n'est pas manoeuvré.

2. Dispositif de direction de véhicule selon la revendication 1, dans lequel
ledit moyen de détection de direction est un capteur de couple (14) qui détecte un couple de direction qui est appliqué sur l'élément de direction (12).

3. Dispositif de direction de véhicule selon la revendication 2, dans lequel
il est détecté que l'élément de direction (12) n'est pas manoeuvré lorsque le couple de direction détecté par ledit capteur de couple (14) est inférieur ou égal à une valeur prédéterminée.

4. Dispositif de direction de véhicule selon la revendication 1, comprenant :
un capteur de couple (14) qui détecte un couple de direction qui est appliqué sur l'élément de direction (12) ; un moteur d'assistance de direction (13) qui assiste la direction sur la base du couple de direction détecté par ledit capteur de couple (14) ; un capteur de rotation (15) qui détecte la rotation dudit moteur (13) ; et un capteur de courant (16) qui détecte le courant d'attaque dudit moteur (13) ; et au moins l'un dudit capteur de couple (14), dudit capteur de rotation (15), et dudit capteur de courant (16) est utilisé en tant que ledit moyen de détection de direction.

5. Dispositif de direction de véhicule selon l'une quelconque des revendications 1 à 4, dans lequel
le réglage de la position de l'élément de direction (12) par ledit actionneur (6) comporte au moins l'un d'un réglage qui déplace la position de l'élément de direction (12) vers l'avant ou vers l'arrière, et d'un réglage qui déplace la position de l'élément de direction (12) vers le haut ou vers le bas.
